# EUROPÄISCHE PATENTSCHRIFT

(11) **EP 1 148 003 B1**
(45) Veröffentlichungstag und Bekanntmachung des Hinweises auf die Patenterteilung: **07.04.2010**
(21) Anmeldenummer: 01109553.6
(22) Anmeldetag: 17.04.2001
(51) Int. Cl.: B65G 17/08, B65G 21/22

(54) **Kurvenführung für eine Förderkette**
Curved guideway for a conveyor chain
Glissière en courbe pour chaîne transporteuse

(30) Priorität: 18.04.2000 DE 10019051
(43) Veröffentlichungstag der Anmeldung: 24.10.2001
(73) Patentinhaber: Flexon Systemplast GmbH, 01809 Dohna (DE)
(72) Erfinder: Janzen, Wolfgang, 57234 Wilnsdorf (DE); Meynerts, Peter, Dipl.-Ing., 09224 Grüna (DE); Nendel, Klaus, Prof. Dr.-Ing., 09569 Oederan (DE); Klem, Rica, Dipl.-Ing., 64331 Weiterstadt (DE)
(74) Vertreter: Maxton Langmaack & Partner

(56) Entgegenhaltungen:
- EP-A- 0 790 196
- US-A- 4 961 492
- US-A- 5 601 180

## Beschreibung

Aus GB-A-1 365 272 ist eine kurvengängige Förderkette bekannt, deren Kettenglieder durch eine Vielzahl gelenkig miteinander verbundener plattenförmiger Tragelemente für die zu fördernden Gegenstände aufweist. Die Führung für diese Förderkette weist zwei parallel zueinander verlaufende und eine Auflage für die Tragelemente der Förderkette bildende, mit Abstand zueinander angeordnete Führungsbahnen auf. In den Kurvenbereichen bilden die Führungsbahnen eine innere Führungsbahn und eine äußere Führungsbahn, die auf ihren einander zugekehrten Seiten durch Seitenführungsflächen begrenzt werden.

Um den Reibungswiderstand zwischen den Kettengliedern und den Führungsbahnen zu vermindern, sind die einzelnen Kettenglieder aus einem Kunststoff hergestellt, in den Partikel aus PTFE eingebettet sind, um so die Gleitfähigkeit der Kontaktflächen der Kettenglieder mit den entsprechenden Flächen der Führungsbahn zu verbessern. Der Nachteil dieser Konstruktion besteht darin, daß bei der Auswahl der verwendbaren Kunststoffe auf die Mischbarkeit des die Matrix bildenden Kunststoffs mit den eingebetteten PTFE-Partikeln abgestellt ist. Damit ergeben sich zwangsläufig Beschränkungen in der Auswahl der Kunststoffe, so daß trotz der verbesserten Gleitfähigkeit die mechanische Festigkeit der Kettenglieder nicht ausreichend sein kann. Von besonderer Bedeutung ist hierbei die Gleitfähigkeit und die mechanische und thermische Widerstandsfähigkeit im Bereich der Umlenkungskurven, da in diesen Bereichen die Kette mit ihren unterhalb der plattenförmigen Tragelemente angeordneten Gelenk- und Führungselementen je nach Umlenkwinkel mit einer größeren Kraft der Zuglast gegen die Seitenführungsflächen der inneren Führungsbahn angedrückt werden. Es hat sich herausgestellt, daß weder das Einbinden von Gleitpartikeln in den Werkstoff der Kettenglieder noch die Auswahl bestimmter Werkstoffpaarungen der Werkstoffe für die Führungsbahn und der Werkstoffe zur Herstellung der Kettenglieder hier Abhilfe zu schaffen vermag, wobei auch bei der Auswahl der Werkstoffe für die Führung Kostengesichtspunkte eine nicht unbeträchtliche Rolle spielen.

Aus US-A-4 961 492 ist ein Kettenförderer der eingangs beschriebenen Art bekannt, bei dem auf die beispielsweise aus einem Metallprofil hergestellten konstruktiv-tragenden Teile der Führungsbahn parallele Kunststoffprofile aufgeklipst werden, auf denen die Förderkette aufliegt. Die Kunststoffprofile sind hierbei so geformt, daß sie die einzelnen mit einer Tragplatte und einer unteren Führungsnase versehenen Kettenglieder formschlüssig halten. Die Kunststoffprofile stellen somit einen integralen, tragenden Teil der Führungsbahn dar. Lediglich in vorgebbaren Bereichen des Obertrums der Führungsbahn sind die Kunststoffprofile so bemessen, daß die Kettenglieder der Förderkette auf diesem aufliegen, aber die untere Führungsnase nicht begrenzen, so daß eine entsprechende Kettenlänge nach oben herausnehmbar ist. Da die Kunststoffprofile einen integralen, mittragenden Teil der Führungsbahn bilden, ist man in der Auswahl der hierfür zu verwendenden Materialien beschränkt.

Aus US-A 5 601 180 sind Führungsbahnen für Kettenförderer der eingangs bezeichneten Art bekannt, bei denen die tragenden Teile der Führungsbahn auf ihrer die Tragplatten der Förderkette tragenden Oberfläche mit noppenartigen Vorsprüngen vorsehen ist. Die aus Kunststoff hergestellten Führungsbahnen sind auf ihrer Seitenführungsfläche aus Gründen der Formbarkeit glattflächig ausgebildet.

Aus EP-A-0 790 196 ist eine Kurvenführung der eingangs bezeichneten Art bekannt, bei der in die Seitenführungsflächen in vorgebbaren Abständen stopfenförmige Schmierelemente eingesetzt sind, durch die der tragende Querschnitt des Profils der Führungsbahn geschwächt wird.

Aus DE 299 21 440 U1 ist eine kurvengängige Förderkette gemäß dem Oberbegriff des Anspruchs 1 bekannt, deren Kurvenführung für eine Scharnierbandkette mit einem Tragkörper, der für das Obertrum der Scharnierbandkette, Tragfläche und Seitenführungsflächen aufweist, wobei die Seitenführungsflächen den Scharniergelenken der Scharnierbandkette zugeordnet sind, wobei die radikale innere Seitenführungsfläche austauschbar ist und eine höhere Verschleißfestigkeit und/oder bessere Gleiteigenschaften aufweist als das Material des übrigen Tragkörpers.

Der Erfindung liegt die Aufgabe zugrunde, für eine Förderkette der eingangs bezeichneten Art eine Kurvenführung zu schaffen, die verbesserte Gleit- und Verschleißeigenschaften und eine höhere Belastbarkeit aufweist.

Diese Aufgabe wird gemäß der Erfindung gelöst durch eine Kurvenführung für eine Förderkette mit Merkmalen des Anspruchs 1. Diese Ausgestaltung hat den Vorteil, daß für jedes Bauelement, also sowohl für die Kettenglieder als auch für die Förderkette und für die Führungsbahn eine optimierte Werkstoffwahl sowohl in bezug auf die mechanischen Eigenschaften, als auch in bezug auf die Verarbeitbarkeit und die Kosten getroffen werden kann. So können sowohl für die Kettenglieder als auch für die Führungsbahnen jeweils ein hochfester und gegen Verschleiß widerstandsfähiger Werkstoff ausgewählt werden, so daß bei der gegebenen Werkstoffpaarung, in der Regel Kunststoffe, für den Geradlauf zufriedenstellende Gleiteigenschaften zwischen den Führungsbahnen und den darüber gleitend fortbewegten zu einer Kette zusammengesetzten Kettengliedern gegeben ist. Für den Geradlauf ist in bezug auf den Reibungswiderstand lediglich das jeweils maximal zulässige Gewicht des zu fördernden Gegenstandes maßgeblich, während in den nicht belasteten Kettenteilen ein Reibungswiderstand praktisch gegen Null geht, da hier nur das Eigengewicht der Kette entsprechende Reibungskräfte zwischen Tragelementen und Führungsbahnen verursacht. Anders ist es jedoch in den Kurvenführungen, da hier jeweils eine größere Kraft als die für die Kettenbewegung notwendige Zugkraft die entsprechenden Führungsflächen der einzelnen Kettenglieder gegen die Seitenführungsflächen der inneren Führungsbahn anpreßt. Dadurch daß gemäß der Erfindung zumindest die Seitenführungsflächen der inneren.Führungsbahn mit einer reibungsmindernden und Wärme ableitenden Auflage in Form eines Gleitbandes aus Metall versehen wird, ergibt sich nicht nur ein erhöhter Verschleißwiderstand, sondern auch eine bessere Wärmeabfuhr, so daß sich insgesamt eine Erhöhung der möglichen Grenzbelastung um etwa 50% ergibt. Die Grenzbelastung wird hierbei definiert durch die Fördergeschwindigkeit und durch die Summe der Normalkraft aus der Masse der Kettenglieder und des Fördergutes. Darüber hinaus ergibt sich eine deutliche Reduzierung der Geräuschentwicklung im Trockenlauf. Besonders vorteilhaft ist eine derartige Kurvenführung, wenn die beiden vorzugsweise aus einem Werkstoff bestehenden Führungsbahnen über einen Steg vorzugsweise stoffschlüssig miteinander verbunden sind.

Die erfindungsgemäße Anordnung einer reibungsmindernden Auflage in Form eines Gleitbandes hat den Vorteil, daß ohne Beeinträchtigung der Stabilität und/oder der Abmessungen der Kurvenführung hier mit einfachen Mitteln die reibungsmindernde Auflage an der Seitenführungsfläche angeordnet werden kann. Je nach Wahl des Werkstoffs für das Gleitband genügt hier ein Band von wenigen Millimetern Dicke, das in einfacher Weise auf die Seitenführungsfläche aufgebracht und, vorzugsweise formschlüssig, mit der Führungsbahn verbunden werden kann. Das Gleitband kann hierbei durch ein T-förmiges Profil gebildet werden, das mit dem Mittelsteg des Profils in eine entsprechende Nut der Seitenführungsfläche eingesetzt werden kann, wobei der Mittelsteg einerseits und die Nut in der Seitenführungsfläche andererseits als Schwalbenschwanz-Profil ausgebildet sein können. Es ist aber auch möglich, im Übergangsbereich zwischen Seitenführungsfläche und dem die beiden Führungsbahnen verbindenden Steg eine entsprechende längslaufende Nut vorzusehen, in die das Seitenband eingesetzt wird.

Als besonders vorteilhaft hat sich herausgestellt, wenn das Gleitband auf seiner Gleitfläche mit einer Profilierung versehen ist. In einer besonders bevorzugten Ausgestaltung der Erfindung ist vorgesehen, daß die Profilierung durch eine Vielzahl nebeneinander liegender Ausbauchungen gebildet wird. Zweckmäßigerweise sind die Ausbauchungen buckelförmig ausgebildet, wobei es weiterhin zweckmäßig ist, wenn die buckelförmigen Ausbauchungen versetzt zueinander angeordnet sind. Wichtig ist hierbei, daß die Ausbauchungen auf Seiten der Gleitflächen gratfrei sind. Hierdurch ergibt sich eine Verminderung der Reibung um etwa ein Drittel. Zweckmäßig ist es hierbei, wenn die buckelförmigen Ausbauchungen in Richtung der Führungsbahn länglich geformt sind, so daß in Verbindung mit der zueinander versetzten Anordnung ein Anstoßen der in Laufrichtung vorne liegenden Kante der Seitenfläche des Kettengliedes und den Ausbauchungen vermieden werden, und somit ein sanfter Übergang gewährleistet ist.

Gemäß einer anderen Ausgestaltung ist es auch möglich, die Ausbauchungen in einem Schnitt parallel zur Führungsbahn wellenförmig auszubilden. Auch hier ergeben sich, wie bei den buckelförmigen Ausbauchungen, in etwa linienförmige Berührungen zwischen dem Gleitband und den Führungsflächen der Tragelemente.

Die Erfindung wird anhand schematischer Zeichnungen von Ausführungsbeispielen näher erläutert. Es zeigen:
- Fig. 1: eine Kurvenführung mit Förderkette,
- Fig. 2: in größerem Maßstab einen Schnitt gemäß der Linie II-II in Fig. 1,
- Fig. 3: die stirnseitige Fixierung eines Gleitbandes,
- Fig. 4: eine andere Ausführungsform der stirnseitigen Fixierung des Gleitbandes,
- Fig. 5: in größerem Maßstab eine Ausführung der Oberflächenstruktur des Gleitbandes,
- Fig. 6: einen Schnitt gemäß der Linie VI-VI in Fig. 5,
- Fig. 7: eine andere Form der Befestigung eines Gleitbandes.

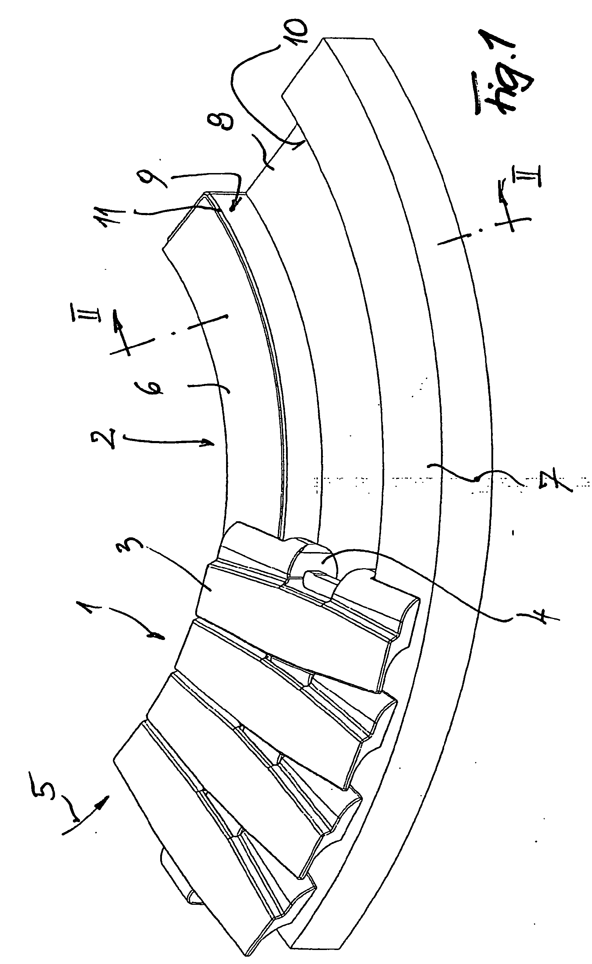

In Fig. 1 ist für eine Förderkette 1 in Form einer sogenannten kurvengängigen Scharnierbandkette eine Kurvenführung 2 dargestellt. Die Förderkette 1 besteht aus einer Vielzahl gelenkig miteinander verbundener Kettenglieder, die als plattenförmige Tragelemente ausgebildet sind, deren Gelenkteile 4 unterhalb der Tragplatte angeordnet sind.

Eine derartige Förderkette wird beispielsweise in Richtung des Pfeiles 5 über die Führung 2 bewegt, die im wesentlichen durch zwei Führungsbahnen 6, 7 gebildet wird, die über einen Steg 8 fest miteinander verbunden sind. Bei der Herstellung aus Kunststoff sind die beiden Führungsbahnen 6, 7 stoffschlüssig über den Steg 8 miteinander verbunden.

Die beiden Führungsbahnen 6 und 7 sind jeweils auf ihren einander zugekehrten Seiten durch Seitenführungsflächen 9, 10 begrenzt, so daß die Förderkette 1 über die nach unten ragenden und mit seitlichen Führungsflächen versehenen Gelenkteile 4 auch seitlich geführt sind.

Bei der hier dargestellten Kurvenführung bildet die Führungsbahn 6 die innere Führungsbahn und die Führungsbahn 7 die äußere Führungsbahn, so daß infolge der über den Antrieb auf die Förderkette 1 ausgeübten Zugkraft die Förderkette in diesem Bereich mit ihren Gelenkteilen 4 an die Seitenführungsfläche 9 der inneren Führungsbahn 6 mit erheblicher Kraft angedrückt wird.

Um den Verschleiß und den Reibungswiderstand der inneren Seitenführungsfläche 9 zu vermindern, ist diese mit einer reibungsmindernden Auflage 11 versehen, die im Aufbau und in weiteren konstruktiven Einzelheiten anhand der nachstehenden Figuren näher erläutert wird.

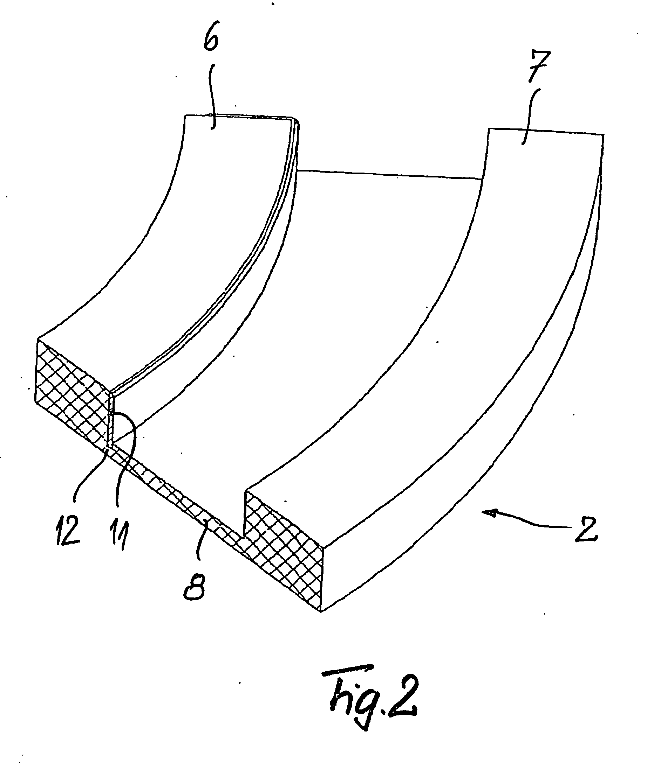

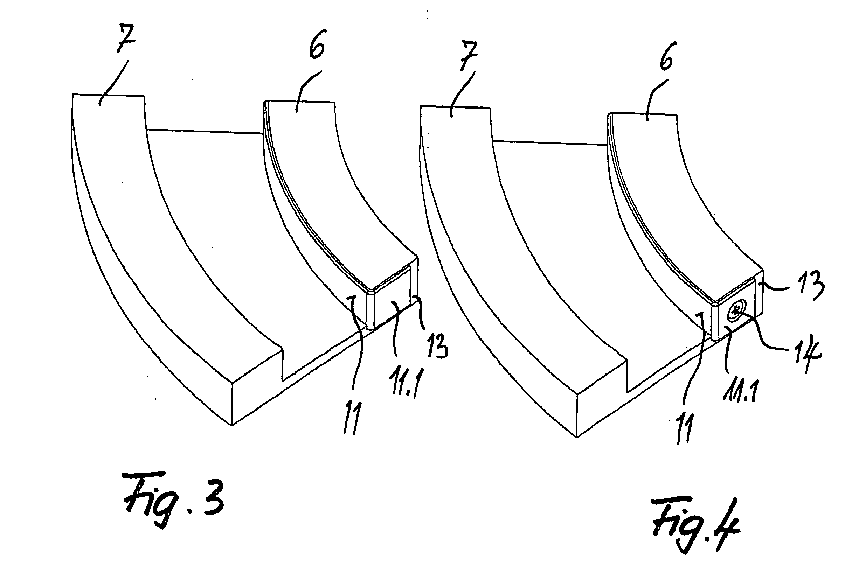

Wie aus Fig. 2 ersichtlich, ist die reibungsmindernde Auflage 11 in Form eines Gleitbandes ausgeführt, das mit seiner untenliegenden Kante in einer Nut 12 im Übergangsbereich zwischen Seitenführungsfläche 9 und Steg 8 über die gesamte Länge gehalten ist. Eine derartige Kurvenführung besteht je nach Größe und Kurvenradius aus zwei oder mehr Kurvensegmenten, so daß das Gleitband 11 jeweils stirnseitig, wie in Fig. 3 und Fig. 4 dargestellt, festgelegt werden kann. Zweckmäßig ist es hierbei, wenn die Laufrichtung der Förderkette in bezug auf die Kurvenführung bekannt ist, so daß das Gleitband 11 jeweils am auflaufseitigen Stirnende 13 mittels einer Abwinklung 11.1 festgelegt ist. Die Abwinklung 11.1 kann hierbei klemmend zwischen zwei aneinanderstoßenden Führungssegmenten eingeklemmt sein oder aber, wie in Fig. 4 dargestellt, mittels einer Schraube 14 festgelegt sein. Diese Anordnung hat den Vorteil, daß sich das Gleitband 11 in Laufrichtung auf Zug belastet in Längsrichtung unter dem Einfluß wechselnder Temperaturen ausdehnen bzw. schrumpfen kann, so daß immer eine glatte Anlage des Gleitbandes an der Seitenführungsfläche der inneren Führungsbahn gewährleistet ist.

Da die Führung mit ihren Führungsbahnen 6, 7 üblicherweise aus einem Kunststoff, beispielsweise aus einem hochmolekularen Polyethylen, hergestellt ist, das eine schlechte Wärmeleitfähigkeit aufweist, bietet die Verwendung eines Gleitbandes aus Metall in diesem über die Reibung zwischen Förderkette und Seitenführungsfläche hochbelasteten Bereich auch den Vorteil einer guten Wärmeabfuhr, so daß neben günstigen Reibbeiwerten zwischen dem Werkstoff der Förderkette einerseits und dem Werkstoff des Gleitbandes andererseits auch die thermische Belastung des Förderkettenwerkstoffs herabgesetzt ist. Hierbei hat es sich überraschenderweise als besonders vorteilhaft herausgestellt, wenn das Gleitband auf seiner Gleitfläche, d. h. der der Förderkette zugekehrten Fläche, mit einer Profilierung versehen ist. Durch die Vielzahl von Punkt- oder Linienberührungen, je nach Art der Profilierung zwischen der Gleitfläche des Gleitbandes und der entsprechenden Gegenfläche der Gelenkteile 4 der Förderkette, wird die Reibung deutlich herabgesetzt und das Verschleißverhalten besonders günstig beeinflußt.

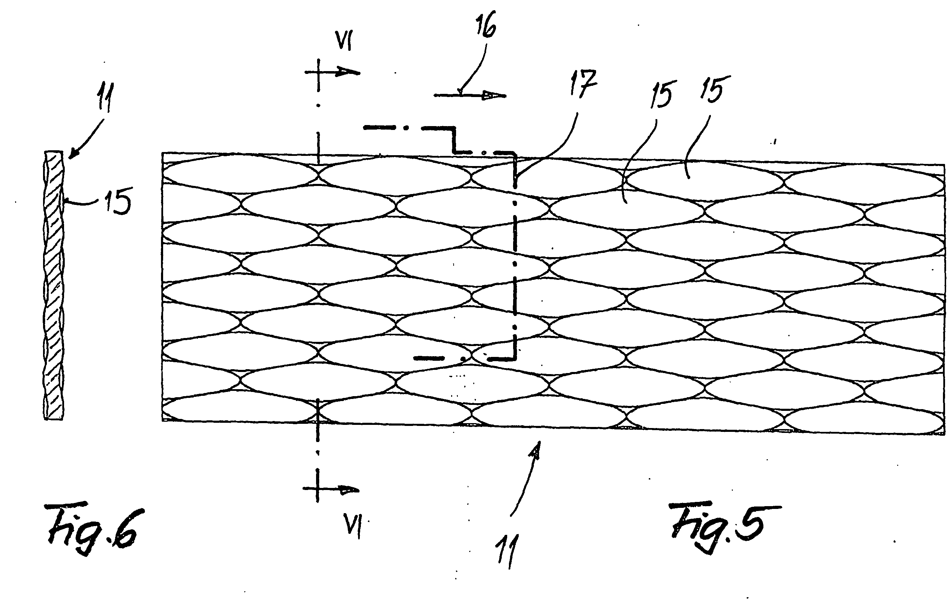

In Fig. 5 ist in einer Aufsicht und in Fig. 6 in einem Schnitt in vergrößerter Darstellung eine besonders vorteilhafte Profilierung für ein Gleitband dargestellt. Diese wird durch eine Vielzahl nebeneinander liegender buckelförmiger Ausbauchungen 15 gebildet, die bei dem hier dargestellten Ausführungsbeispiel länglich geformt und versetzt zueinander angeordnet sind. Bei einer durch den Pfeil 16 angedeuteten Durchlaufrichtung ist für die als Strichpunktlinie angedeutete Vorderkante 17 der Seitenfläche eines Gelenkteiles 4 erkennbar, daß hier jeweils ein stoßfreier Übergang der Kante von einer buckelförmigen Ausbauchung 15 auf die nächstfolgende buckelförmige Ausbauchung 15 gewährleistet ist. Zwischen den einzelnen buckelförmigen Ausbauchungen und der anliegenden seitlichen Führungsfläche des Gelenkteils 4 verbleiben dann jeweils mäanderartige Hohlräume, so daß gerade bei schnellaufenden und damit hochbelasteten Förderketten Umgebungsluft von außen eingezogen und auch wieder nach außen abgeführt wird und so neben der Wärmeabfuhr durch Wärmeleitung auch durch Ventilation für eine Kühlung des Gleitbandes und der darübergleitenden Seitenflächen der Gelenkteile 4 Sorge getragen ist. Die Ausbauchungen können hierbei mittels einer Prägewalze in das Bandmaterial eingeformt werden. Auch eine, bezogen auf einen Horizontalschnitt, d. h. einen parallel zur Führungsbahn verlaufenden Schnitt, wellenförmige Profilierung des Gleitbandes ist möglich.

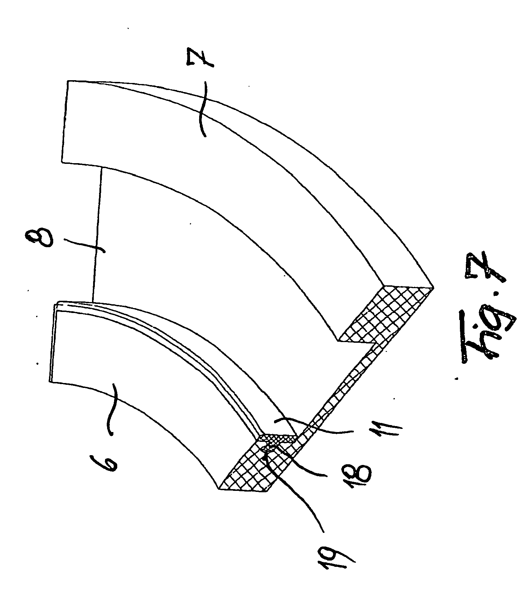

In Fig. 7 ist eine andere Form der Befestigung eines Gleit-bandes 11 dargestellt. Hierbei weist das Gleitband 11 einen T-förmigen Querschnitt auf, so daß der vorhandene Mittelsteg 18 in eine entsprechende Nut 19 in der zugehörigen Seitenführungsfläche der Führungsbahn 6 festgelegt werden kann. Auch hier ist das Gleitband 11 aus einem Metall hergestellt und kann mit einer Profilierung versehen sein.

Die zuvor beschriebenen Ausführungsformen einer Kurvenführung sind speziell für sogenannte Magnet-Kurvenführungen vorgesehen, d. h. Kurvenführungen, bei denen im Bereich des Steges 8 und/oder unterhalb der Führungsbahnen 6, 7 Permanentmagnete eingesetzt sind, die

die Kunststoff-Förderketten über die aus ferromagnetischem Material hergestellten Gelenkbolzen gegen ein "Hochkippen" unter dem Einfluß der Zugkraft halten.

## Patentansprüche

1. Kurvenführung aus Kunststoff für eine Kunststoff-Förderkette (1), die eine Vielzahl gelenkig miteinander verbundene, Kettenglieder (3) bildende Tragelemente für die zu fördernden Gegenstände aufweist, mit einer inneren Führungsbahn (6) und einer äußeren Führungsbahn (7), die mit Abstand parallel zueinander verlaufen und die in einer gemeinsamen Ebene eine Auflage für die Tragelemente der Förderkette (1) bilden und die auf ihren einander zugekehrten Seiten durch Seitenführungsflächen (9, 10) begrenzt sind, die jeweils unter einem Winkel zur Auflage ausgerichtet sind, **dadurch gekennzeichnet, dass** zumindest die Seitenführungsfläche (9) der inneren Führungsbahn (6) mit einer Reibung mindernden und Wärme ableitenden Auflage in Form eines Gleitbandes (11) aus Metall verbunden ist.

2. Kurvenführung nach einem der Ansprüche 1 oder 2, **dadurch gekennzeichnet, daß** das Gleitband (11) formschlüssig mit der Führungsbahn (6) verbunden ist.

3. Kurvenführung nach Anspruch 1 oder 2, **dadurch gekennzeichnet, daß** das Gleitband (11) auf seiner Gleitfläche mit einer Profilierung versehen ist.

4. Kurvenführung nach Anspruch 3, **dadurch gekennzeichnet, daß** die Profilierung durch eine Vielzahl von nebeneinander liegender Ausbauchungen (15) gebildet wird.

5. Kurvenführung nach Anspruch 4, **dadurch gekennzeichnet, daß** die Ausbauchungen (15) buckelförmig ausgebildet sind.

6. Kurvenführung nach Anspruch 5, **dadurch gekennzeichnet, daß** die buckelförmigen Ausbauchungen (15) versetzt zueinander angeordnet sind.

7. Kurvenführung nach Anspruch 5 oder 6, **dadurch gekennzeichnet, daß** die buckelförmigen Ausbauchungen (15) in Richtung der Führungsbahn (6) länglich geformt sind.

8. Kurvenführung nach Anspruch 4, **dadurch gekennzeichnet, daß** die Ausbauchungen (15) in einem Schnitt parallel zur Führungsbahn (6) wellenförmig ausgebildet sind.

## Claims

1. A curved guide of plastics material for a plastics-material conveyor chain (1) which comprises a plurality of carrying elements connected to one another in an articulated manner and forming chain links (3), with an inner guide path (6) and an outer guide path (7) which extend at a distance parallel to each other and which form a support for the carrying elements of the conveyor chain (1) in a common plane and which are bounded on their mutually facing sides by lateral guide faces (9, 10) which are orientated at an angle to the support in each case, **characterized in that** at least the lateral guide face (9) of the inner guide path (6) is connected to a support in the form of a sliding band (11) of metal which reduces friction and dissipates heat.

2. A curved guide according to one of Claims 1 or 2 [*sic*], **characterized in that** the sliding band (11) is connected in a positively locking manner to the guide path (6).

3. A curved guide according to Claim 1 or 2, **characterized in that** the sliding band (11) is provided on its sliding face with a profiling.

4. A curved guide according to Claim 3, **characterized in that** the profiling is formed by a plurality of bulges (15) arranged adjacent to one another.

5. A curved guide according to Claim 4, **characterized in that** the bulges (15) are made embossed.

6. A curved guide according to Claim 5, **characterized in that** the embossed bulges (15) are arranged offset from one another.

7. A curved guide according to Claim 5 or 6, **characterized in that** the embossed bulges (15) have an elongate shape in the direction of the guide path (6).

8. A curved guide according to Claim 4, **characterized in that** the bulges (15) are made corrugated in a section parallel to the guide path (6).

## Revendications

1. Glissière courbe en matière plastique pour une chaîne transporteuse (1) en matière plastique, qui comporte une pluralité d'éléments de support pour les objets à transporter, lesquels sont assemblés entre eux de manière articulée et forment des maillons de chaîne (3), comportant une voie de guidage (6) intérieure et une voie de guidage (7) extérieure, qui s'étendent parallèlement à distance l'une de l'autre et qui, dans un plan commun, forment une surface de pose pour les éléments de support de la chaîne transporteuse (1) et qui, sur leurs côtés orientés l'un vers l'autre, sont délimitées par des faces de guidage latérales (9, 10), qui sont orientées chacune en angle avec la surface de pose, **caractérisée en ce qu'**au moins la face de guidage latérale (9) de la voie de guidage (6) intérieure est assemblée à une surface de pose, réduisant le frottement et dissipant de la chaleur, réalisée sous la forme d'une bande de glissement (11) en métal.

2. Glissière courbe selon l'une des revendications 1 ou 2, **caractérisée en ce que** la bande de glissement (11) est assemblée par conjugaison de forme à la voie de guidage (6).

3. Glissière courbe selon la revendication 1 ou 2, **caractérisée en ce que** la bande de glissement (11) est munie d'un profilage sur sa face de glissement.

4. Glissière courbe selon la revendication 3, **caractérisée en ce que** le profilage est formé par une pluralité de protubérances (15) situées les unes à côté des autres.

5. Glissière courbe selon la revendication 4, **caractérisée en ce que** les protubérances (15) sont réalisées en forme de bossage.

6. Glissière courbe selon la revendication 5, **caractérisée en ce que** les protubérances (15) en forme de bossage sont disposées en étant décalées les unes par rapport aux autres.

7. Glissière courbe selon la revendication 5 ou 6, **caractérisée en ce que** les protubérances (15) en forme de bossage ont une forme allongée dans la direction de la voie de guidage (6).

8. Glissière courbe selon la revendication 4, **caractérisée en ce que**, sur une coupe, les protubérances (15) sont réalisées sous la forme d'ondulations parallèles à la voie de guidage (6).
